(19) Europäisches Patentamt
European Patent Office
Office européen des brevets

(11) **EP 4 256 209 B1**

(12) **EUROPÄISCHE PATENTSCHRIFT**

(45) Veröffentlichungstag und Bekanntmachung des Hinweises auf die Patenterteilung:
**30.10.2024 Patentblatt 2024/44**

(21) Anmeldenummer: **21836363.8**

(22) Anmeldetag: **06.12.2021**

(51) Internationale Patentklassifikation (IPC):
**F16B 13/14** *(2006.01)* **E01B 9/18** *(2006.01)*
**E01B 9/38** *(2006.01)* **E01B 31/26** *(2006.01)*

(52) Gemeinsame Patentklassifikation (CPC):
**E01B 9/18; E01B 9/38; E01B 31/26;** F16B 13/141

(86) Internationale Anmeldenummer:
**PCT/EP2021/084415**

(87) Internationale Veröffentlichungsnummer:
**WO 2022/122661 (16.06.2022 Gazette 2022/24)**

(54) **SYSTEM ZUR BEFESTIGUNG EINER SCHIENE UND VERFAHREN ZUR REPARATUR**

SYSTEM FOR FASTENING A RAIL AND METHOD FOR REPAIR

SYSTÈME DE FIXATION D'UN RAIL ET PROCÉDÉ DE RÉPARATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2020 DE 102020132441**

(43) Veröffentlichungstag der Anmeldung:
**11.10.2023 Patentblatt 2023/41**

(73) Patentinhaber: **Vossloh Fastening Systems GmbH 58791 Werdohl (DE)**

(72) Erfinder:
• **BEDNARCZYK, Adrian 58509 Lüdenscheid (DE)**
• **RIEDERER, Christine 58840 Plettenberg (DE)**
• **JONCA, Michael 58515 Lüdenscheid (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
**DE-U1- 202015 103 972 FR-A1- 2 970 717**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein System zur Befestigung einer Schiene für ein Schienenfahrzeug auf einem Untergrund. Das System umfasst ein Plattenelement mit einer Unterseite, mit der es im Gebrauch auf dem Untergrund abgestützt ist, mit einer eine im Gebrauch vom Untergrund abgewandten Oberseite sowie mit einer eine von der Oberseite zur Unterseite führenden Durchgangsöffnung und einen Dübel mit einem im Gebrauch in den Untergrund eingelassenen Dübelkörper und mit einer von einem Endabschnitt des Dübelkörpers umgrenzten Einführöffnung, durch die ein Befestigungselement in den Dübelkörper eingeführt werden kann.

Ebenso betrifft die Erfindung eine Anordnung zur Befestigung einer Schiene auf einem Untergrund, die ein System der voranstehenden Art umfasst, sowie ein Verfahren zur Reparatur einer derart gebildeten Anordnung.

Anordnungen der voranstehend angegebenen Art werden in der Fachsprache auch als "Schienenbefestigungspunkte" bezeichnet. Bei solchen Schienenbefestigungspunkten handelt es sich um Anordnungen von Bauteilen, die funktional zusammenwirken, um an einem bestimmten Ort, also dem "Punkt", an dem die jeweilige Befestigung auf dem die Schiene tragenden Untergrund errichtet ist, eine Schiene in einer definierten Weise in einer bestimmten Position auf dem Untergrund zu halten.

Bei dem Untergrund, auf dem derartige Schienenbefestigungsanordnungen montiert sind, handelt es sich heute regelmäßig um Schwellen, Platten oder vergleichbare Bauteile, die aus einem gießfähigen Werkstoff, wie einer Betonmasse, einer Kunststoffmasse oder anderen hierzu geeigneten Werkstoffen, geformt sind.

Bauteil-Anordnungen zur Schienenbefestigung umfassen üblicherweise mindestens eine Führungsplatte, durch die die zu befestigende Schiene an mindestens einer der Längsseiten ihres Schienenfußes geführt ist; mindestens ein Federelement, das gegen den Untergrund, auf dem der Schienenbefestigungspunkt errichtet ist, direkt oder indirekt verspannt ist und ein Befestigungsmittel zum Verspannen des Federelements. Bei dem Federelement eines Schienenbefestigungspunktes der hier in Rede stehenden Art kann es sich um eine S- oder W-förmige so genannte "Spannklemme" handeln.

Bei vielen Anwendungen ist im jeweiligen Schienenbefestigungspunkt zusätzlich eine Unterlegplatte vorgesehen, die mit ihrer Unterseite auf dem Untergrund abgestützt ist. An der im Gebrauch vom Untergrund abgewandten Oberseite der Unterlegplatte sind dabei typischerweise eine Aufstandfläche, auf der der Schienenfuß der zu befestigenden Schiene abgestützt ist, sowie weitere Formelemente angeformt oder Bauteile vorgesehen, die zur Positionierung, zum Führen oder zum Halten der anderen Elemente der jeweiligen Befestigungsanordnung dienen.

Zahlreiche Beispiele für bekannte Varianten von Schienenbefestigungspunkten der voranstehend erläuterten Art sind unter der URL https:lwww.vossloh.com/ de/produkte-und-loesungen/produktfinder/, unter der URL https://www.schwihag.com/de/produkte/schienenbefestigung.html und unter der URL https://www.pandrol.com zu finden sowie beispielsweise im "Oberbauhandbuch", 2. Aufl., Ausgabe 08/2010, herausgegeben von der ThyssenKrupp GFT Gleistechnik GmbH, sowie in zahlreichen weiteren Veröffentlichungen der Fach- und Patentliteratur beschrieben.

Bei der Herstellung der den jeweiligen Untergrund für die Schienenbefestigung bildenden Bauteile, wie Schwelle oder Platte, werden die Dübel in der Regel bereits im Werk in das betreffende Bauteil eingegossen. Hierzu werden die Dübel mittels geeigneter Halterungen im Formhohlraum der das jeweilige Bauteil abbildenden Form so positioniert, dass ihre Eintrittsöffnungen sich nach dem Abgießen der Formmasse und Verfestigen des Bauteils im Bereich der Montagefläche des fertigen Bauteils befinden, auf der später die jeweilige Schienenbefestigungsanordnung montiert wird.

Aus der DE 20 2015 103 972 U1 ist ein Schienenbefestigungssystem zur Befestigung einer Schiene auf einem Schienenuntergrund bekannt, das eine. Unterlegplatte und zwei Dübel aufweist. In die Unterlegplatte sind zwei Öffnungen eingeformt, welche die Unterlegplatte von ihrer Ober- zu ihrer Unterseite durchdringen. Am ihre Eintrittsöffnung umgrenzenden Endabschnitt der Dübel ist jeweils ein umlaufender, seitlich vorstehender Kragen ausgebildet. Mit diesem Kragen ist der Dübel in einer Halterung verrastet, die im an die Unterseite der Unterlegplatte angrenzenden Mündungsbereich der jeweiligen Durchgangsöffnung der Unterlegplatte ausgeformt ist. Neben den Rasten, die den Dübel halten, ist im Bereich der Halterung ein umlaufender Absatz ausgebildet, gegen den der Dübel mit seinem oberen, um seine Eintrittsöffnung umlaufenden Rand anstößt. Auf diese Weise ist seine Position in Bezug auf die Längsachse der Durchgangsöffnung der Unterlegplatte so fixiert, dass der Dübel mit seinem Dübelkörper über die Unterseite der Unterlegplatte hervorsteht. Dies erlaubt es, bei der Fertigung des jeweiligen den Untergrund bildenden Bauteils die Unterlegplatte gemeinsam mit den an ihr befestigten Dübeln in einer Form anzuordnen, so dass mit minimiertem Aufwand nicht nur die lagerichtige Ausrichtung der Dübel, sondern auch der Unterlegplatte auf dem Bauteil gesichert ist.

Auf dem voranstehend erläuterten Stand der Technik aufsetzend ist bei einem aus der WO 2019/137905 A1 bekannten Schienenbefestigungssystem die Halterung des Dübels an der Unterlegplatte dadurch ermöglicht, dass in die Durchgangsöffnung der Unterlegplatte eine Haltekontur in Form eines Innengewindes eingeformt und / oder der Dübel ein Außengewinde aufweist, an das die Innenkontur der Durchgangsöffnung so angepasst ist, dass der Dübel von der Oberseite der Unterlegplatte her in die Durchgangsöffnung einschraubbar und genauso aus ihr ausschraubbar ist. Dies erlaubt es, den Dübel, wenn er beschädigt ist, auf vergleichbar einfache Weise aus dem jeweiligen Untergrund zu entfernen und durch einen neuen Dübel zu ersetzen, wobei die Unterlegplatte und die auf ihr abgestützte Schiene in ihrer jeweiligen Montageposition verbleiben können. Um einen sicheren Halt der Dübel beim Eingießen in das den jeweiligen Untergrund bildende Bauteil zu gewährleisten, muss allerdings jeweils ein Teilabschnitt des Dübels in der zugeordneten Durchgangsöffnung der Unterlegplatte verbleiben.

Des Weiteren ist aus der DE 10 2005 003 799 A1 ein aus Kunststoff bestehendes Plattenelement bekannt, das dazu vorgesehen ist, auf einer Schwelle aufgelegt zu werden. Auf dem Plattenelement sitzt im Gebrauch eine Führungsplatte. Dabei weist das Plattenelement eine Durchgangsöffnung auf, durch die von oben ein Dübel gesteckt ist. Mit seinem oberen, seine Eintrittsöffnung umgrenzenden Rand ist der Dübel klemmend in der Durchgangsöffnung gehalten. Dazu ist an dem Dübel ein ringförmiger Absatz gebildet, in den eine in der Durchgangsöffnung des Plattenelements vorgesehene Raste greift.

Ausgehend von dem voranstehend erläuterten Stand der Technik hat sich die Aufgabe gestellt, ein System zum Befestigen einer Schiene auf einem Untergrund zu schaffen, bei dem einerseits eine sichere Verbindung zwischen dem jeweiligen Plattenelement und dem an ihm gehaltenen Dübel gesichert ist, wenn der Dübel bei der Herstellung des den jeweiligen Untergrund für die Schienenbefestigung bildenden Bauteils eingegossen wird, und bei dem andererseits der Dübel im Zuge einer Reparatur auf einfache Weise ersetzt werden kann, ohne dass dazu das Plattenelement demontiert werden muss.

Ebenso sollte eine einfach instand zu haltende Anordnung zur Befestigung einer Schiene und ein Verfahren zur Reparatur einer derart hergestellten Anordnung vorgeschlagen werden.

Die Erfindung hat diese Aufgabe durch eine Vorrichtung gelöst, die mindestens die in Anspruch 1 angegebenen Merkmale besitzt.

Ein die voranstehende Aufgabe auf erfindungsgemäße Weise lösende Anordnung zur Schienenbefestigung ist in Anspruch 14 angegeben.

Ein Verfahren, das in erfindungsgemäßer Weise die Reparatur einer derart erfindungsgemäß hergestellten Anordnung ermöglicht, umfasst mindestens die in Anspruch 15 genannten Arbeitsschritte.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßes System zur Befestigung einer Schiene für ein Schienenfahrzeug auf einem Untergrund umfasst dementsprechend in Übereinstimmung mit dem oben erläuterten Stand der Technik ein Plattenelement, das eine Unterseite, mit der das Plattenelement im Gebrauch auf dem Untergrund abgestützt ist, eine im Gebrauch vom Untergrund abgewandte Oberseite sowie eine von der Oberseite zur Unterseite führende Durchgangsöffnung aufweist, und einen Dübel, der einen im Gebrauch in den Untergrund eingelassenen Dübelkörper und eine von einem Endabschnitt des Dübelkörpers umgrenzte Einführöffnung zum Einführen eines Befestigungselements in den Dübel aufweist.

Erfindungsgemäß ist nun bei einem solchen System

- an den Endabschnitt des Dübelkörpers über einen Verbindungsabschnitt, der eine Sollbruchstelle aufweist, ein Halteabschnitt angebunden, der seitlich, d.h. in radialer Richtung nach außen gerichtet, von dem Endabschnitt des Dübelkörpers absteht,

- an der Unterseite des Plattenelements eine Halterung vorgesehen, in der die Durchgangsöffnung des Plattenelements mündet,

- der Dübel mit seinem Halteabschnitt in der Halterung gehalten, die einen in Längsrichtung des Dübels wirkenden Anschlag für den Halteabschnitt des Dübels bildet, und

- die Innenkontur der Durchgangsöffnung des Plattenelements so an die Außenkontur des Dübelkörpers angepasst, dass der Dübelkörper nach einem Bruch des Verbindungsabschnitts des Dübels durch die Durchgangsöffnung des Plattenelements bewegbar ist.

Eine erfindungsgemäße Anordnung zur Befestigung einer Schiene auf einem Untergrund umfasst dementsprechend ein erfindungsgemäßes, durch ein Plattenelement und ein an dem Plattenelement gehaltenen Dübel gebildetes System zur Schienenbefestigung, wobei der Dübel mindestens mit einem Abschnitt in den Untergrund eingegossen ist.

Bei einem erfindungsgemäßen System ist somit der Dübel nicht in der Durchgangsöffnung des Plattenelements gehalten, sondern in einer außerhalb der Durchgangsöffnung vorgesehenen Halterung.

Ein erfindungsgemäßer Dübel umfasst dazu einen Halteabschnitt und einen Dübelkörper. Der Halteabschnitt steht in seitlicher, radialer Richtung von dem Endabschnitt ab, der die Eintrittsöffnung des Dübelkörpers umgibt und wirkt mit der an der Unterlegplatte vorgesehenen Halterung zusammen, um auf diese Weise den Dübel an der Unterlegplatte zu halten. Der Dübelkörper übernimmt dagegen die Funktion eines konventionellen Dübels, der in den Untergrund eingelassen wird, um dort den Halt eines Spann- oder Befestigungselements zu sichern, das zum Verspannen oder Fixieren von Bauelementen der Schienenbefestigungsanordnung benötigt wird.

Wesentlich ist, dass der Halteabschnitt bei einem erfindungsgemäßen Dübel an den Dübelkörper über einen Verbindungsabschnitt angebunden ist, der eine Sollbruchstelle aufweist. Sollbruchstellen, wie sie die Erfindung vorsieht, sind dazu eingerichtet, dass sie bei Überschreiten einer bestimmten Belastung brechen. Dementsprechend wird bei einem erfindungsgemäß gestalteten Dübel der Halteabschnitt, der im Neuzustand über den mit der Sollbruchstelle versehenen Verbindungsabschnitt an den Dübelkörper angebunden ist, von dem Dübelkörper getrennt, wenn auf den Dübelkörper gezielt eine über einen Grenzwert liegende Belastung aufgebracht wird. Diese Belastung kann eine in Längsrichtung des Dübelkörpers wirkende Zug- und / oder eine in Umfangsrichtung des Dübelkörpers wirkende Momentenbelastung sein.

Um einen zielsicheren Bruch des Verbindungsabschnitts unter einer in Umfangsrichtung des Dübels wirkenden Belastung zu sichern, kann der Dübel in Bezug auf seine Längsachse verdrehsicher in der Halterung des Plattenelements gehalten sein.

Die Sollbruchstelle des Verbindungsabschnitts kann dabei dadurch gebildet sein, dass die Dicke oder Breite des Verbindungsabschnitts lokal reduziert ist. Hierzu kann in den Verbindungsabschnitt an der Stelle, an der der Bruch stattfinden soll, eine Kerbe oder Nut eingeformt sein. Im Fall, dass der Verbindungsabschnitt unter einer Zugbelastung des Dübels brechen soll, ist es zweckmäßig, wenn sich die Materialreduzierung in Umfangsrichtung des Dübels erstreckt. Soll der Bruch vorrangig durch Dreh- bzw. Momentenbelastung des Dübelkörpers ausgelöst werden, ist eine Materialreduzierung, die sich parallel zur Längsachse des Dübels erstreckt, günstig. Dabei könnten beide Varianten der Materialreduzierung selbstverständlich auch miteinander kombiniert werden.

Nach dem Brechen des Verbindungsabschnitts an der Sollbruchstelle kann, beispielsweise im Zuge einer Reparatur, ein verschlissener Dübelkörper unabhängig von dem Halteabschnitt aus der im Untergrund vorhandenen Dübelausnehmung, in der der Dübelkörper im Gebrauch sitzt, herausbewegt werden. Da gleichzeitig die Innenabmessungen der Durchgangsöffnung so an die Außenabmessungen des Dübelkörpers angepasst sind, dass der Dübelkörper störungsfrei durch die Durchgangsöffnung bewegt werden kann, kann somit der Dübelkörper auch nachträglich aus der unter Verwendung eines erfindungsgemäßen Systems gebildeten Schienenbefestigungsanordnung entfernt werden, ohne dass dazu das jeweilige Plattenelement oder gar die Schiene in ihrer Position verändert werden müssen.

Ein besonderer Vorteil der Erfindung besteht dabei darin, dass in der Durchgangsöffnung des Plattenelements keine Formelemente oder desgleichen vorhanden sein müssen, über die ein Halt des Dübels in der Durchgangsöffnung ermöglicht oder gesichert ist. Dies erlaubt es, Dübel mit beliebig geformten Dübelkörpern unabhängig von bestimmten Formvorgaben zu verwenden. Somit können die Dübelkörper erfindungsgemäß vorgesehener Dübel an ihren Außenseiten mit einem Gewinde versehen sein. Solcherart gestaltete Dübelkörper können in die für sie im jeweiligen Untergrund vorgesehene Dübelaufnahme eingeschraubt und aus ihr genauso wieder ausgeschraubt werden. Genauso ist es möglich, Dübelkörper zu verwenden, die an ihrer Außenseite keine speziellen Formelemente oder solche Formelemente aufweisen, die hinsichtlich der Einleitung der im Gebrauch auf den Dübel wirkenden Kräfte in das sie umgebende Material des Untergrunds optimiert sind, dabei jedoch keine Gewindeform oder desgleichen aufweisen.

Den voranstehenden Erläuterungen entsprechend erlaubt ein erfindungsgemäßes System zur Schienenbefestigung und eine darauf aufbauende Anordnung zur Schienenbefestigung eine Reparatur, indem erfindungsgemäß folgende Arbeitsschritte durchlaufen werden:

- Entfernen eines durch die Durchgangsöffnung des Plattenelements geführten und in dem Dübel sitzenden Befestigungselements;

- Einführen eines Werkzeugs durch die Durchgangsöffnung des Plattenelements;

- Belasten des in dem den Untergrund bildenden Bauteil sitzenden Dübelkörpers mittels des Werkzeugs, wobei die auf den Dübelkörper wirkende Belastung so lange gesteigert wird, bis der Verbindungsabschnitt des Dübels an seiner Sollbruchstelle bricht;

- Herausbewegen des Dübelkörpers aus dem Bauteil und durch die Durchgangsöffnung des Plattenelements, wobei der Dübelkörper in dem Bauteil eine durch den Dübelkörper in dem Bauteil abgeformte Dübelausnehmung hinterlässt;

- Einführen eines neuen Dübelkörpers durch die Durchgangsöffnung des Plattenelements in die Dübelausnehmung des Bauteils.

Bei einem erfindungsgemäß gestalteten Plattenelement ist die zum Halten des erfindungsgemäß ausgebildeten Dübels vorgesehene Halterung in Bezug auf die Durchgangsöffnung so ausgerichtet, dass die Durchgangsöffnung an der Unterseite der Unterlegplatte in der Halterung mündet. Dies erlaubt es, den Dübel in der Halterung über seinen Halteabschnitt so zu halten, dass er hinsichtlich der Durchgangsöffnung lagerichtig ausgerichtet ist und zwar insbesondere derart, dass seine Längsachse koaxial zur Längsachse der Durchgangsöffnung ausgerichtet ist. Dabei kann die Unterseite der Unterlegplatte oder ein daran speziell vorgesehenes Formelement als Anschlag genutzt werden, durch die eine Verschiebung des gesamten Dübels in die Durchgangsöffnung des Plattenelements verhindert und die axiale Position des Dübels in Bezug auf die Längsachse der Eintrittsöffnung definiert ist.

Für die Anpassung der Innenkontur der Durchgangsöffnung des Plattenelements an die Außenkontur des Dübelkörpers kann daher zweckmäßigerweise der kleinste Innendurchmesser Di_min der Durchgangsöffnung des Plattenelements größer als der größte Außendurchmesser DaK_max des Dübelkörpers, jedoch kleiner als der größte Außendurchmesser DaH_max des Dübels in dem Bereich sein, in dem der Halteabschnitt an den Dübelkörper angebunden ist. Für den kleinsten Innendurchmesser Di_min der Durchgangsöffnung des Plattenelements, den größten Außendurchmesser DaK_max des Dübelkörpers und den größten Außendurchmesser DaH_max des Dübels gilt bei einer dieser Maßgabe folgenden Auslegung also

$$DaK\_max < Di\_min < DaH\_max.$$

Bei einer solchen Auslegung ist bei einer Reparatur einer erfindungsgemäßen Schienenbefestigungsanordnung sichergestellt, dass der Halteabschnitt, nachdem er vom Dübelkörper des erfindungsgemäß gestalteten Dübels abgetrennt ist, an seinem Montageort verbleibt, während der Dübelkörper aus seiner Aufnahme im Untergrund durch die Durchgangsöffnung des Plattenelements, insbesondere in einer Zug- und/oder Schraubbewegung, hinausbewegt werden kann.

Der Verbindungsabschnitt eines erfindungsgemäßen Dübels kann eine beliebige Form haben, so lange seine Sollbruchstelle sicher zum Bruch unter geeigneter Belastung führt. Steg- oder stiftartig ausgebildete Verbindungsabschnitte bieten sich hier an, wobei sich bei einer solchen Ausgestaltung des Verbindungsabschnitts ein besonders formstabiler Halt des Dübelkörpers an dem Halteabschnitt des Dübels ergibt, wenn zwei oder mehr Verbindungsabschnitte vorgesehen sind, die vorzugsweise in gleichmäßigen Winkelabständen um die Längsachse verteilt zueinander beanstandet angeordnet sind.

Der Halteabschnitt kann als Ringsegment oder als vollständiger Ring ausgebildet sein, wobei sich das Ringsegment oder der Ring jeweils in Umfangsrichtung um den die Eintrittsöffnung des Dübelkörpers umgrenzenden Endabschnitt des Dübelkörpers erstrecken. Bei einer solchen ringartigen Gestaltung erweist es sich als besonders vorteilhaft, wenn der Halteabschnitt über jeweils zwei oder mehr jeweils mit einer Sollbruchstelle versehene Verbindungsabschnitte gehalten ist, die beabstandet zueinander und um den Dübelkörper verteilt zwischen dem Endabschnitt und dem Halteabschnitt angeordnet sind und so die lagerichtige, formstabile Positionierung des Halteabschnitts in der für den Dübel vorgesehenen Halterung sichern.

Eine hinsichtlich der Einfachheit der Montage einerseits und der Funktion eines erfindungsgemäßen Systems andererseits besonders vorteilhafte Ausgestaltung ist dadurch gekennzeichnet, dass die an dem Plattenelement ausgebildete Halterung für den Dübel eine Schiebeführung umfasst, in die der Dübel mit seinem Halteabschnitt einschiebbar ist und die sich quer zur Längsachse der Durchgangsöffnung des Plattenelements an dessen Unterseite erstreckt. Eine solche Schiebeführung lässt sich nicht auf einfache Weise an das Plattenelement anformen, sondern erlaubt auch auf besonders einfache Weise eine verdrehsichere, lagegenaue Positionierung des Dübels an der Mündung der Durchgangsöffnung des Plattenelements. So können an dem Halteabschnitt eben und parallel zueinander ausgerichtete Führungsflächen vorgesehen sein, die, wenn der Dübel in eine linear geformte Schiebeführung eingesetzt ist, an entsprechend ausgerichteten und positionierten Führungsflächen der Schiebeführung entlang gleiten, wobei gleichzeitig durch die aneinander anliegenden Führungsflächen von Schiebeführung und Halteabschnitt ein Verdrehen des Dübels um die Längsachse seines Dübelkörpers verhindert ist. Die auf diese Art und Weise durch die Schiebeführung der Halterung bewirkte doppelte Festlegung des Dübels gegen eine Bewegung in die Durchgangsöffnung des Plattenelements einerseits und eine Rotation um die Längsachse seines Dübelkörpers andererseits erlaubt es auf besonders sichere und einfache Weise, den Bruch des Verbindungsabschnitts, der den Halteabschnitt am Dübelkörper hält, gezielt herbeizuführen, wenn der Dübelkörper ersetzt werden soll.

Um die Position des Dübels in der Schiebeführung weiter zu vereinfachen, kann die Halterung ein Anschlagelement umfassen, das die in Bezug auf die Durchgangsöffnung des Plattenelements lagerichtige Schiebestellung des Dübels festlegt.

Zusätzlich oder alternativ kann ein Riegelelement vorgesehen sein, das den Dübel in seiner in Bezug auf die Durchgangsöffnung des Plattenelements lagerichtigen Position fixiert. Dieses Riegelelement kann durch eine an das Plattenelement angeformte Raste oder einen an dem Plattenelement befestigbaren Bolzen gebildet sein. Ein solcher Bolzen kann beispielsweise manuell in eine entsprechend geformte Aufnahme gesteckt werden, die an der Unterseite des Plattenelements ausgebildet sein kann.

Bei dem zu einem erfindungsgemäßen Schienenbefestigungssystem gehörenden "Plattenelement" kann es sich um jede Art von Bauteil handeln, das in Kombination mit einem in einen Untergrund eingelassenen Dübel für die Befestigung einer Schiene vorgesehen ist, wobei durch die Durchgangsöffnung des Plattenelements ein Befestigungselement geführt wird, das in dem Dübel befestigt wird, um das Plattenelement oder ein auf dem Plattenelement montiertes Bauteil, wie beispielsweise ein Federelement, an dem Untergrund zu fixieren oder zu verspannen. So kann es sich beispielsweise bei dem Plattenelement um eine Führungsplatte, die im Gebrauch die zu befestigende Schiene an einer ihrer Längsseiten führt, oder eine Unterlegplatte handeln, auf deren Oberseite eine Aufstandfläche ausgebildet ist, auf der im Gebrauch die zu befestigende Schiene abgestützt ist.

Dabei ist die Anzahl der Dübel, die in erfindungsgemäßer Weise an dem jeweiligen Plattenelement gehalten sind, nicht auf eins beschränkt. Vielmehr kann es gerade im Fall, dass das Plattenelement eine Unterlegplatte ist, zweckmäßig sein, zwei oder mehr Dübel in erfindungsgemäßer Weise an der Unterlegplatte zu halten, wenn diese bei der Herstellung des Bauteils, das jeweils den die Schiene tragenden Untergrund bilden soll, mit dem betreffenden Bauteil verbunden wird.

Das Plattenelement und der Dübel eines erfindungsgemäßen Systems sind in an sich bekannter Weise vorzugsweise aus dafür im Stand der Technik bewährten Kunststoffen geformt.

Typischerweise werden bei der Herstellung einer aus einem Dübel und einem Plattenelement gebildeten Anordnung zur Befestigung einer Schiene auf einem Untergrund, der durch ein aus einer Formmasse gegossenes Bauteil, insbesondere einer Schwelle oder einer Platte, gebildet ist, folgende Arbeitsschritte durchlaufen:

- Bereitstellen eines gemäß einem der voranstehenden Ansprüche ausgebildeten Systems, wobei der Dübel mittels seines Halteabschnitts in der Halterung des Plattenelements befestigt ist;

- Positionieren des Plattenelements mit dem an ihm befestigten Dübel in einer Form zum Abformen des Bauteils derart, dass die Unterseite des Plattenelements auf dem Niveau der für das Plattenelement vorgesehenen Stützfläche des Bauteils ausgerichtet ist und der Dübel in einen von der Form umgrenzten Formraum ragt;

- Abgießen einer Formmasse in den Formraum der Form;

- Verfestigen der Formmasse in dem Formraum zu dem Bauteil;

- Entnehmen des Bauteils mit dem in das Bauteil eingegossenen Dübel und dem von dem Dübel an dem Bauteil gehaltenen Plattenelement aus der Form.

Nachfolgend wird die Erfindung anhand einer ein Ausführungsbeispiel darstellenden Zeichnung näher erläutert. Es zeigen jeweils schematisch:

Fig. 1      eine Anordnung, in der eine Schiene für ein Schienenfahrzeug auf einem Untergrund befestigt ist, in einer teilweise geschnittenen Seitenansicht quer zur Längserstreckung der Schiene;

Fig. 2      einen in der Anordnung gemäß Fig. 1 vorgesehenen Dübel in seitlicher Ansicht;

Fig. 3      den Dübel gemäß Fig. 2 in einer Ansicht von oben;

Fig. 4      eine in der Anordnung gemäß Fig. 1 vorgesehene Unterlegplatte mit daran gehaltenen Dübeln in einer Ansicht von unten;

Fig. 5      einen vergrößerten Ausschnitt Z von Fig. 4;

Fig. 6      einen Ausschnitt der Unterlegplatte gemäß Fig. 4 in einem Schnitt entlang der in Fig. 5 eingezeichneten Schnittlinie A - A;

Fig. 7a - 7c      einen Ausschnitt der Unterlegplatte gemäß Fig. 4 während verschiedener Stadien der beim Befestigen des in Fig. 2 dargestellten Dübels an der Unterlegplatte absolvierten Arbeitsschritte jeweils in einem Längsschnitt;

Fig. 8      eine alternative Ausführung einer Verriegelung des Dübels gemäß Fig. 2 an der Unterlegplatte in einer Fig. 7c entsprechenden Ansicht.

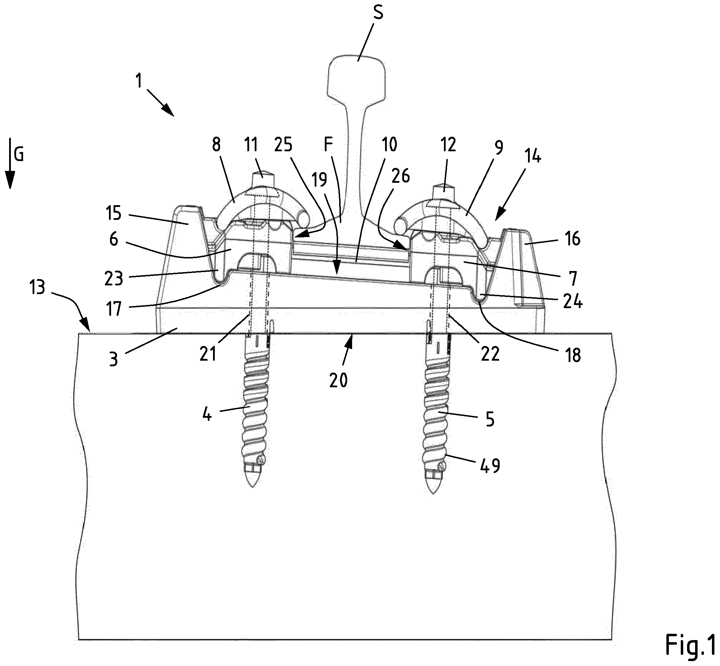

Die in Fig. 1 dargestellte Anordnung 1 für die Befestigung einer Schiene S auf einer einen Untergrund bildenden Schwelle 2 umfasst ein erstes Plattenelement in Form einer Unterlegplatte 3, zwei Dübel 4,5, zwei weitere Plattenelemente in Form von konventionell geformten Winkelführungsplatten 6,7, zwei ebenso konventionell geformte, als Federelemente eingesetzte Spannklemmen 8,9, einen Stapel 10 aus Zwischenplatten und zwei als Befestigungselemente dienende Schwellenschrauben 11,12.

Die Schwelle 2 ist in konventioneller Weise aus einem Betonwerkstoff hergestellt und weist an ihrer Oberseite eine Montagefläche 13 auf, auf der die Anordnung 1 montiert ist.

An ihrer von der Schwelle 2 abgewandten Oberseite 14 sind in ebenfalls bekannter Weise an die Unterlegplatte 3 Formelemente angeformt, die zum Führen und Befestigen der auf Unterlegplatte 3 angeordneten Bauteile dienen. So weist die Unterlegplatte 3 an ihren einander gegenüberliegenden Schmalseiten jeweils eine Schulter 15,16 auf, deren einander zugewandten Stützflächen angeschrägt sind und ausgehend vom freien oberen Ende der Schultern 15,16 jeweils in einer nutförmigen Ausnehmung 17,18 enden, die sich über die Breite der Unterlegplatte 3 erstreckt. Zwischen den Ausnehmungen 17,18 ist eine ebene, jedoch ausgehend vom Rand der einen Ausnehmung 17 in Richtung der anderen Ausnehmung 18 schräg abfallende Aufstandfläche 19 ausgebildet. Dabei ist in den jeweils die Ausnehmungen 17,18 angrenzenden Randbereichen der Aufstandfläche 19 jeweils eine von der Oberseite 14 zur Unterseite 20 der Unterlegplatte 3 führende Durchgangsöffnung 21,22 in die Unterlegplatte 3 eingeformt
Auf der Aufstandfläche 19 stehen zum einen die Winkelführungsplatten 6,7, die mit ihrem Winkelführungsabschnitt 23,24 in der jeweils zugeordneten Ausnehmung 17,18 sitzen. Mit ihren einander zugewandten Führungsflächen 25,26 begrenzen die Winkelführungsplatten 6,7 den Raum, in dem die Schiene S mit ihrem Schienenfuß F angeordnet ist.

Die Schiene S steht zwischen den Winkelführungsplatten 6,7 auf dem Stapel 10 aus Zwischenplatten, von den mindestens eine aus einem elastischen Material besteht, um der Abstützung der Schiene S auf der Schwelle 2 eine bestimmte Nachgiebigkeit in Schwerkraftrichtung G zu verleihen, und von denen die anderen aus einem festen Material bestehen, um die beim Überfahren der Schiene S durch ein Schienenfahrzeug auftretende Gewichtsbelastung gleichmäßig zu verteilen oder die Höhenposition der Schiene S zu regulieren. Jeweils eine der ω-förmigen Spannklemmen 8,9 ist auf einer der Winkelführungsplatten 6,7 positioniert und übt mit ihren Haltearmen auf die zugeordnete Oberseite des Schienenfußes F eine elastische Niederhaltekraft aus. Die Spannklemmen 8,9 sind dabei durch jeweils eine der Schwellenschrauben 10,11 gegen die Schwelle 2 verspannt.

Die Schwellenschrauben 10,11 sind dazu durch die ihnen jeweils zugeordnete Durchgangsöffnung 21,22 der Unterlegplatte 3 geführt und in den ihnen jeweils zugeordneten, in der Schwelle 2 eingelassenen Dübel 4,5 eingeschraubt.

Die konventionell aus einem Kunststoff hergestellten Dübel 4,5 sind bei der Herstellung der Schwelle 2 in der oben beschriebenen Weise in die Schwelle 2 eingegossen worden. Dazu waren sie während des Eingießens an der Unterseite 20 der Unterlegplatte 3 positionssicher gehalten.

Zu diesem Zweck weisen die Dübel 4,5 einen Dübelkörper 27 auf, der nach Art eines konventionellen Dübels geformt ist und an seiner Außenseite wie auch an seiner Innenseite mit einem Gewinde versehen ist. Der obere Endabschnitt 28 des Dübelkörpers 27 umgrenzt eine Einführöffnung, durch die die jeweilige Schwellenschraube 11,12 in den zugeordneten Dübel 4,5 eingeschraubt ist.

Am oberen Rand des Endabschnitts 28 ist ein seitlich von dem Dübelkörper 27 abstehender ringförmiger Halteabschnitt 29 angeformt, der über vier gleichmäßig um die Längsachse L des Dübelkörpers 27 verteilt angeordnete, stegförmige Verbindungsabschnitte 30,31,32,33 an dem Dübelkörper 27 gehalten ist.

An den Verbindungsabschnitten 30 - 33 ist jeweils eine sich in Umfangsrichtung U des Dübelkörpers 27 erstreckende Kerbe 34 eingeformt. Die so erzeugte Materialreduzierung bildet eine Sollbruchstelle 35, an der die Verbindungabschnitte 30 - 33 brechen, wenn auf sie eine koaxial zur Längsachse L ausgerichtete, einen Grenzwert überschreitende Zugbelastung wirkt.

An zwei einander gegenüberliegenden Außenseiten ist der Halteabschnitt 29 jeweils zu Führungsflächen 36,37 abgeflacht, die eben ausgebildet sind und sich parallel zueinander erstrecken.

An der Unterseite 20 der Unterlegplatte 3 ist jeweils in einem Bereich unterhalb der Mündungen 47 der Durchgangsöffnungen 21,22 eine Halterung 38,39 für den jeweils zugeordneten Dübel 4,5 ausgebildet.

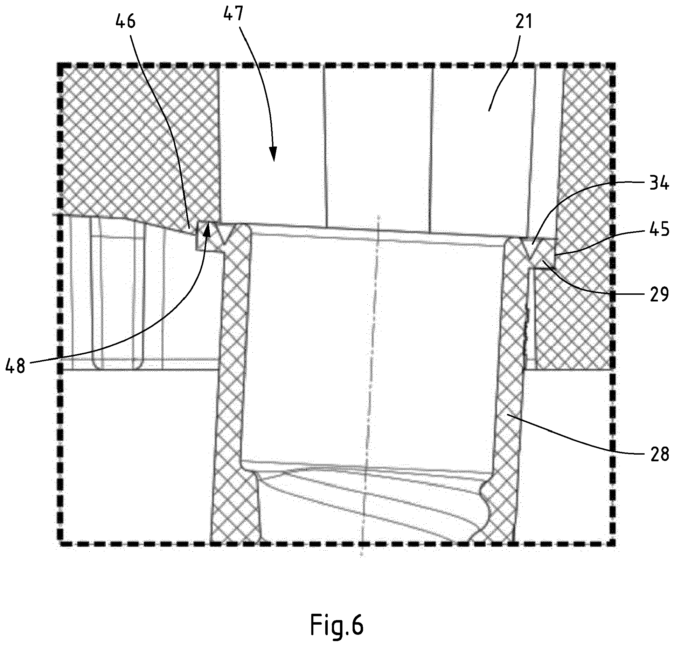

Die Halterungen 38,39 umfassen dabei jeweils eine Schiebeführung 40, die durch zwei parallel zueinander, schienenartig geformte und sich parallel zu den Längsseiten der Unterlegplatte 3 erstreckende Führungsnuten 41,42 gebildet ist. Die Nutöffnungen der Führungsnuten 41,42 sind dabei einander zugewandt. Gleichzeitig sind die Führungsnuten 41,42 an ihrem einen Ende 43,44 offen und in einem dem Abstand der Führungsflächen 36,37 des Halteabschnitts 29 des jeweiligen Dübels 4,5 entsprechend angeordnet. Auf diese Weise kann der jeweilige Dübel 4,5 mit seinem Halteabschnitt 29 von den offenen Enden 43,44 aus in die Schiebeführung 40 eingeführt und darin verschoben werden, bis die Längsachse L des Dübelkörpers 27 fluchtend zur Längsachse der jeweiligen Durchgangsöffnung 21,22 ausgerichtet ist (Figuren 6a - 6c). Am Ende der Schiebeführung 40 ist dabei ein Anschlag 45 vorgesehen, der die Endposition der Verschiebung des Dübels 4,5 in der Schiebeführung 40 festlegt. Gleichzeitig ist auf der zum Anschlag 45 gegenüberliegenden Seite der Schiebeführung ein Riegelelement in Form einer an die Unterlegplatte 3 angeformten Raste 46 vorgesehen. Diese Raste 46 weist eine zu den offenen Enden 43,44 der Führungsnuten 41,42 angeschrägte Anlauffläche auf. Beim Einschieben in die Schiebeführung 40 gleitet der Dübel 4,5 dementsprechend mit der Oberseite seines Halteabschnitts 29 und dem oberen Rand seines Endabschnitts 28 über die Raste 46 hinweg, bis der Anschlag 45 erreicht ist und die parallel zur Längsachse der jeweiligen Durchgangsöffnung 21,22 ausgerichtete Rastfläche der Raste 46 einen Anschlag bildet, die ein selbsttätiges Zurückbewegen des Dübels 4,5 in der zugeordneten Schiebeführung 40 verhindert. Der jeweilige Dübel 4,5 ist auf diese Weise in der zugeordneten Halterung 38,39 lage- und verdrehsicher in Bezug auf die jeweils zugeordnete Durchgangsöffnung 21,22 der Unterlegplatte 3 an der Unterlegplatte 3 gehalten.

Der kleinste innere Durchmesser $Di\_min$ der Durchgangsöffnungen 21,22 ist jeweils so viel größer als der größte äußere Durchmesser $Dk\_max$ des Dübelkörpers 27, dass der Dübelkörper 27, wenn er von dem Halteabschnitt 29 getrennt ist, frei durch die jeweils zugeordnete Durchgangsöffnung 21,22 bewegt werden kann.

Gleichzeitig ist der größte Außendurchmesser $DH\_max$ des Halteabschnitts 29 größer als der kleinste Innendurchmesser $Di\_min$ der Durchgangsöffnungen 21,22, so dass der Halteabschnitt 29 mit seiner oberen Anlagefläche an einem um die Mündung 47 der jeweiligen Durchgangsöffnung 21,22 umlaufenden Absatz 48 abgestützt ist, wenn eine durch die Durchgangsöffnung 21,22 in Richtung der Oberseite 14 der Unterlegplatte 3 gerichtete Zugbelastung auf den jeweiligen Dübel 4,5 wirkt.

Soll der jeweils in die Schwelle 2 eingegossene Dübelkörper 27 einer der Dübel 4,5 getauscht werden, weil er beispielsweise durch Gebrauch verschlissen ist, so wird die in den jeweiligen Dübelkörper 27 eingeschraubte Schwellenschraube 11,12 entfernt und an ihrer Stelle ein ebenfalls schraubenförmig geformtes, hier nicht gezeigtes Werkzeug in den Dübelkörper 27 eingeschraubt. Anders als die Schwellenschraube 11,12 ist das Werkzeug jedoch so geformt, dass es den Dübelkörper 27 nicht gegen das ihn umgebende Material der Schwelle 2 presst, sondern eine lose Verdrehung und eine damit kombinierte Zugbelastung des Dübelkörpers 27 ermöglicht. Die so auf den Dübelkörper 27 ausgeübte Belastung wird gesteigert, bis die Sollbruchstellen 35 der Verbindungsabschnitte 30 - 33 brechen und der Halteabschnitt 29 vom Dübelkörper 27 getrennt ist. Anschließend kann der Dübelkörper 27, ggf. unter Beibehaltung der Schraubbewegung, mittels des Werkzeugs durch die jeweilige Durchgangsöffnung 21,22 zur Oberseite 14 der Unterlegplatte 3 bewegt werden, bis er vollständig aus der von ihm zurückgelassenen Dübelaufnahme 49 der Schwelle 2 entfernt ist und frei aus der Durchgangsöffnung 21,22 gezogen werden kann. Der ursprüngliche Halteabschnitt 29 des Dübels 4,5 bleibt dabei in der jeweiligen Halterung 38,39 zurück.

Abschließend wird ein neuer, hier nicht gezeigter Dübel durch die jeweilige Durchgangsöffnung 21,22 hindurch in die Dübelaufnahme 49 der Schwelle 2 eingeführt. Der neue Dübel hat dabei die Form des zuvor entfernten Dübelkörpers 27 im Neuzustand und weist keinen Halteabschnitt oder desgleichen auf, so dass er nicht nur frei durch die Durchgangsöffnung 21,22 bewegt, sondern auch passgenau in die Dübelaufnahme 49 eingeschraubt werden kann.

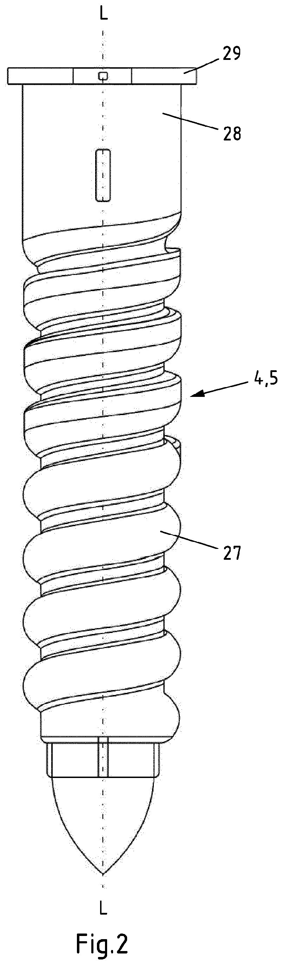

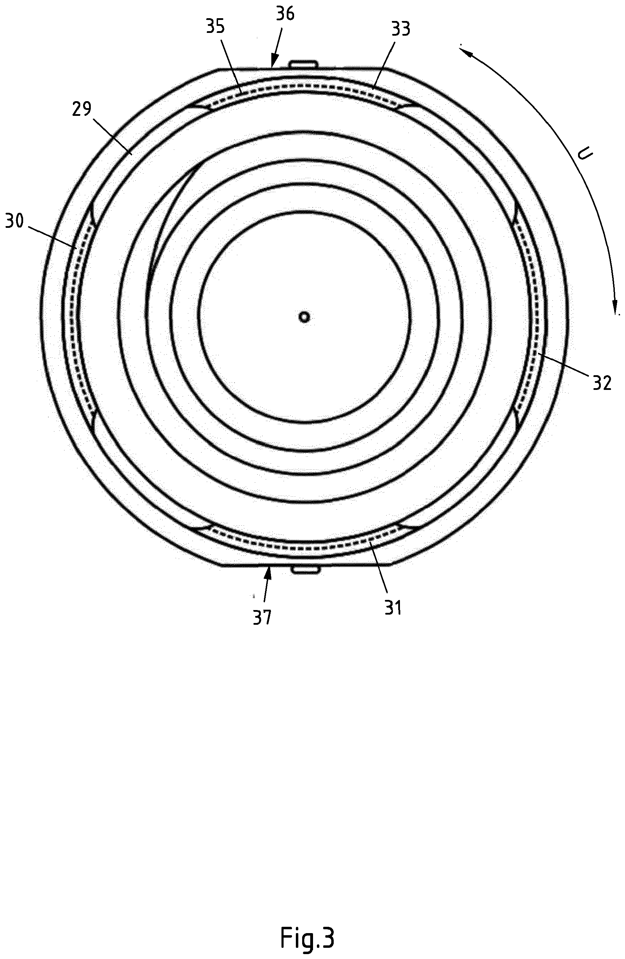

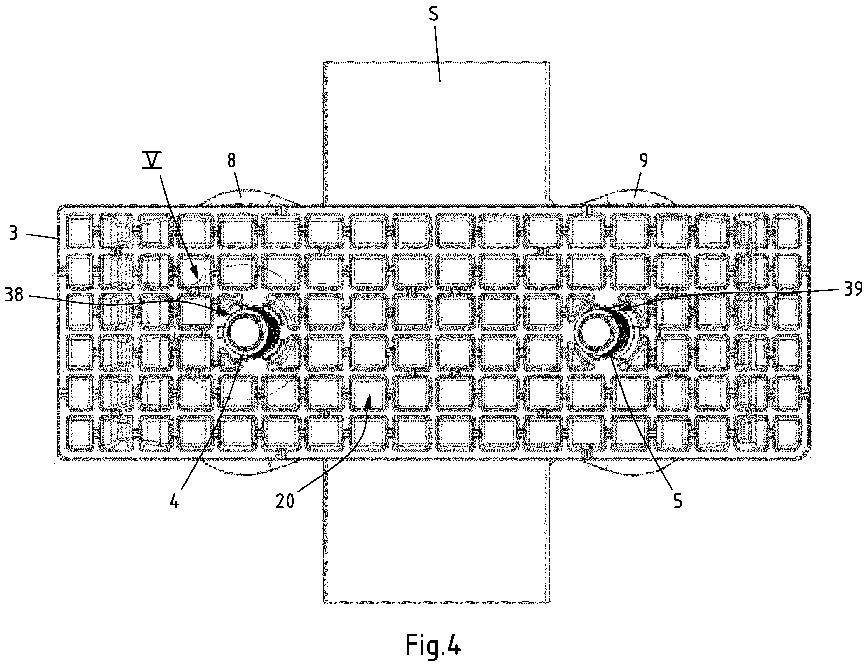

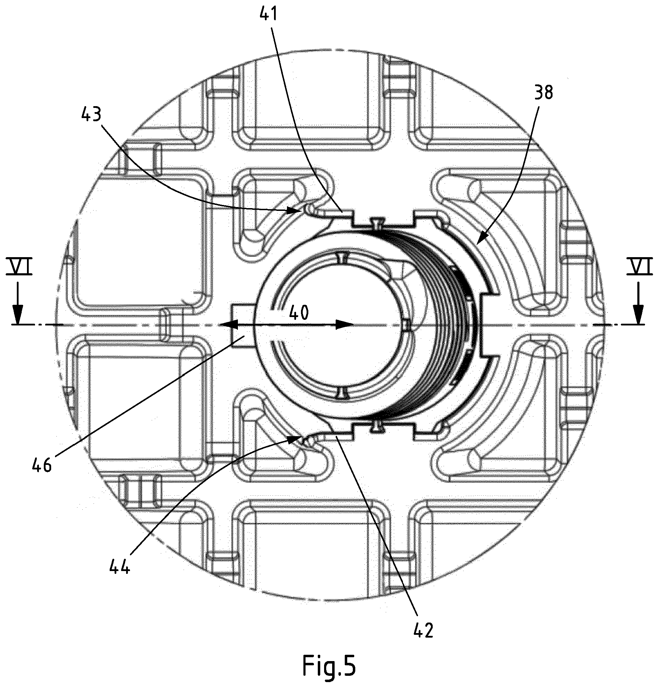

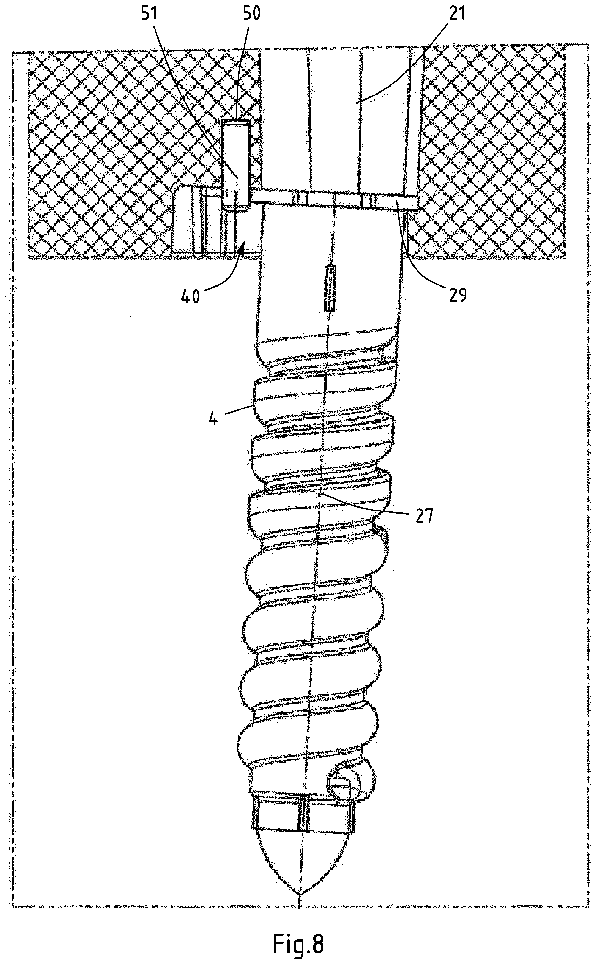

Bis auf die Art und Weise der Verriegelung des Dübels 4 in seiner in Bezug auf die Durchgangsöffnung 21 lagerichtigen Position entspricht die in Fig. 8 in einem Ausschnitt dargestellte alternative, ebenfalls erfindungsgemäße Ausgestaltung einer Schienenbefestigungsanordnung der in den Figuren 1 - 7c dargestellten Ausgestaltung einer erfindungsgemäßen Anordnung 1 zur Befestigung der Schiene S.

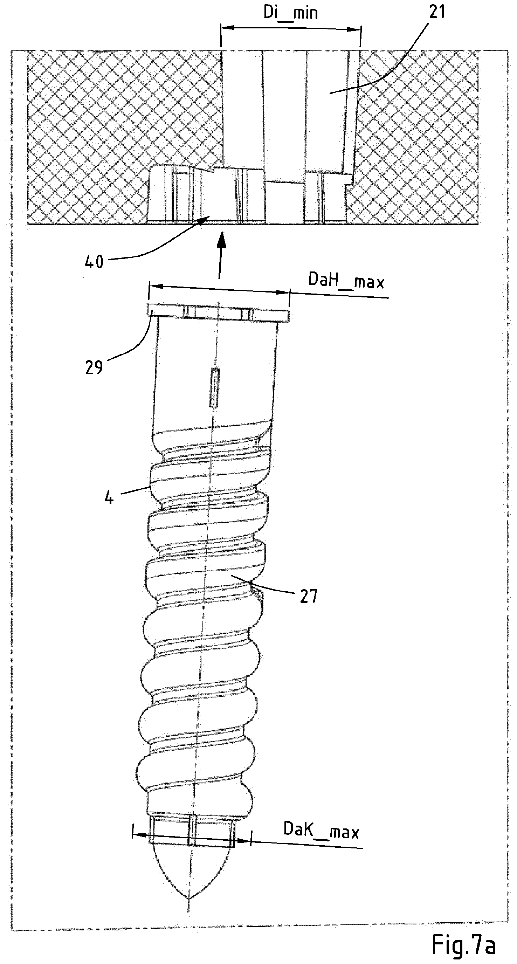

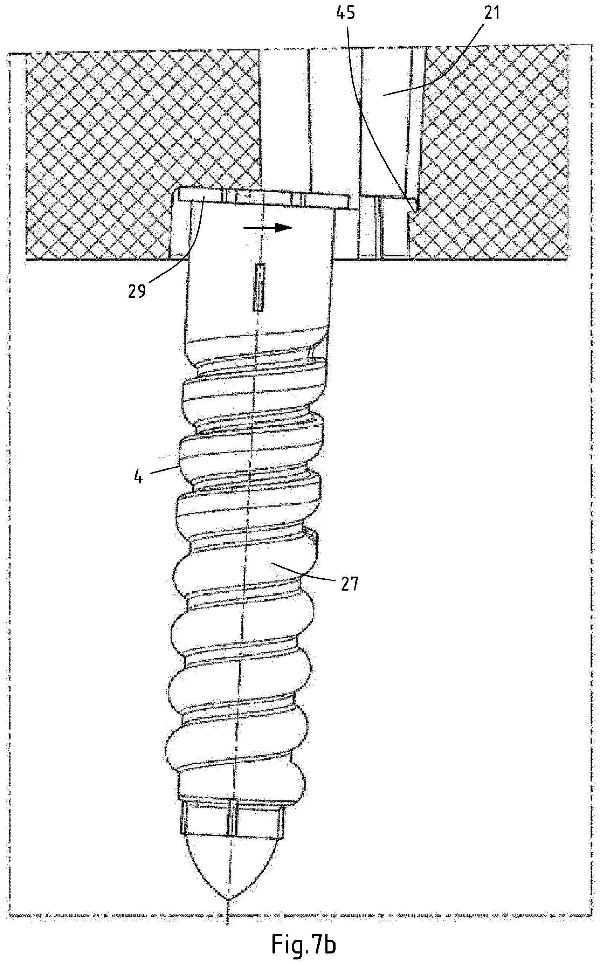

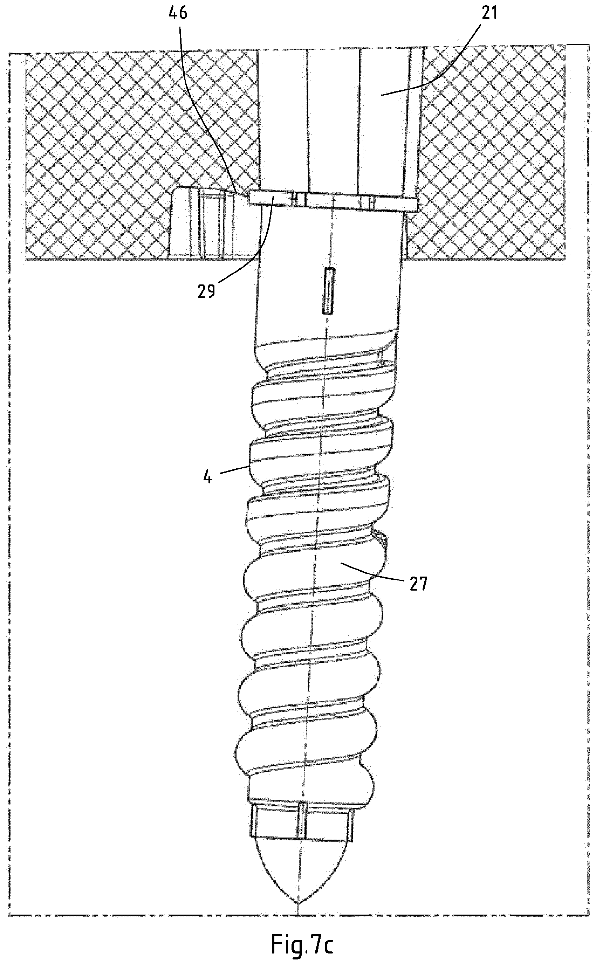

Der Unterschied zwischen den beiden Ausführungsformen besteht darin, dass bei der in Fig. 8 dargestellten Ausgestaltung an Stelle der Raste 46 eine Aufnahme in Form eines Sacklochs 50 in die Unterlegplatte 3 eingeformt ist. Nachdem der Dübel 4, wie in den Figuren 7a und 7b dargestellt, in der Schiebeführung 40 in seine Sollposition unterhalb der Durchgangsöffnung 21 positioniert worden ist, wird in dieses Sackloch 50 ein stiftförmiger Bolzen 51 gesteckt. In dieser Weise hindert der Bolzen 51, wie die Raste 46, den Dübel 4 daran, sich durch unbeabsichtigtes Verschieben in den Führungsnuten 41,42 der Schiebeführung 40 aus seiner Sollposition zu bewegen. Der Vorteil der in Fig. 8 dargestellten Art und Weise der Verriegelung mittels des Bolzens 51 besteht darin, dass der Dübel 4 bei seiner Verschiebung in der Schiebeführung (entsprechend Figur 7b) keinen Rastvorsprung überwinden muss, so dass keine Gefahr einer Beschädigung des Halteabschnitts 29 des Dübels 4 besteht.

Dagegen hat die Raste 46 der in den Figuren 1 - 7c dargestellten Ausgestaltung der Erfindung den Vorteil, dass kein gesondertes Bauteil benötigt wird und auch kein gesonderter Arbeitsgang durchgeführt werden muss, um den Dübel 4 in seiner Sollstellung gegen Verschieben zu sichern.

Mit der Erfindung stehen somit ein System und eine darauf aufbauende Anordnung 1 zur Befestigung einer Schiene S auf einem Untergrund 2. Das System umfasst ein Plattenelement 3 mit einer seiner Oberseite 14 zu seiner Unterseite 20 führenden Durchgangsöffnung 21,22 einen Dübel 4,5, der einen im Gebrauch in den Untergrund 2 eingelassenen Dübelkörper 27 und eine von einem Endabschnitt 28 des Dübelkörpers 27 umgrenzte Einführöffnung zum Einführen eines Befestigungselements 11,12 in den Dübelkörper 27 aufweist. Erfindungsgemäß ist dabei an den Endabschnitt 28 des Dübelkörpers 27 über einen mit einer Sollbruchstelle versehenen Verbindungsabschnitt 30 - 33 ein Halteabschnitt 29 angebunden, der seitlich von dem Endabschnitt 28 absteht. Dabei ist der Unterseite 20 des Plattenelements 3 ist eine Halterung 38,39 vorgesehen, in der die Durchgangsöffnung 21,22 des Plattenelements 3 mündet und in der der Dübel 4,5 mit seinem Halteabschnitt 29 gehalten ist. Die Halterung 38,39 bildet für den Halteabschnitt 29 einen in Längsrichtung des Dübels 4,5 wirkenden Anschlag 48. Die Innenkontur der Durchgangsöffnung 21,22 des Plattenelements 3 ist gleichzeitig so an die Außenkontur des Dübelkörpers 27 angepasst, dass der Dübelkörper 27 nach einem Bruch des Verbindungsabschnitts 30 - 33 des Dübels 4,5 durch die Durchgangsöffnung 21,22 des Plattenelements 3 bewegbar ist.

## BEZUGSZEICHEN

| | |
|---|---|
| 1 | Anordnung für die Befestigung einer Schiene S |
| 2 | Schwelle (Untergrund) |
| 3 | Unterlegplatte (Plattenelement) |
| 4,5 | Dübel |
| 6,7 | Winkelführungsplatten (Plattenelemente) |
| 8,9 | Spannklemmen (Federelemente) |
| 10 | Stapel aus Zwischenplatten |
| 11,12 | Schwellenschrauben (Befestigungselemente) |
| 13 | Montagefläche der Schwelle 2 |
| 14 | Oberseite der Unterlegplatte 3 |
| 15,16 | Schultern der Unterlegplatte 3 |
| 17,18 | nutförmige Ausnehmungen der Unterlegplatte 3 |
| 19 | Aufstandfläche der Unterlegplatte 3 |
| 20 | Unterseite der Unterlegplatte 3 |
| 21,22 | Durchgangsöffnungen der Unterlegplatte 3 |

| | |
|---|---|
| 23,24 | Winkelführungsabschnitte der Winkelführungsplatten 6,7 |
| 25,26 | Führungsflächen der Winkelführungsplatten 6,7 |
| 27 | Dübelkörper der Dübel 4,5 |
| 28 | Endabschnitt des Dübelkörpers |
| 29 | Halteabschnitt der Dübel 4,5 |
| 30 - 33 | Verbindungsabschnitte der Dübel 4,5 |
| 34 | Kerbe |
| 35 | Sollbruchstelle der Verbindungabschnitte 30 - 33 |
| 36,37 | Führungsflächen der Dübel 4,5 |
| 38,39 | Halterungen für jeweils einen Dübel 4,5 |
| 40 | Schiebeführungen der Halterungen 38,39 |
| 41,42 | Führungsnuten der Halterungen 38,39 |
| 43,44 | offene Enden der Führungsnuten 41,42 |
| 45 | Anschlag der Halterungen 38,39 |
| 46 | Raste (Riegelelement) der Halterungen 38,39 |
| 47 | Mündung der Durchgangsöffnung 21 |
| 48 | um die Mündung der Durchgangsöffnung 21,22 umlaufender Absatz (Anschlagelement) |
| 49 | Dübelaufnahme der Schwelle 2 |
| 50 | Sackloch |
| 51 | Stift |
| | |
| Di_min | kleinster innerer Durchmesser der Durchgangsöffnungen 21,22 |
| DaK_max | größter äußerer Durchmesser des Dübelkörpers 27 |
| DaH_max | größter Außendurchmesser des Halteabschnitts 29 |
| F | Schienenfuß |
| G | Schwerkraftrichtung |
| L | Längsachse des Dübelkörpers 27 |
| S | Schiene |
| U | Umfangsrichtung des Dübelkörpers 27 |

**Patentansprüche**

1. System zur Befestigung einer Schiene (S) für ein Schienenfahrzeug auf einem Untergrund (2), wobei das System

   - ein Plattenelement (3), das eine Unterseite (20), mit der das Plattenelement (3) im Gebrauch auf dem Untergrund (2) abgestützt ist, eine im Gebrauch vom Untergrund (2) abgewandte Oberseite (14) sowie eine von der Oberseite (14) zur Unterseite (20) führende Durchgangsöffnung (21,22) aufweist, und

   - einen Dübel (4,5) umfasst, der einen im Gebrauch in den Untergrund (2) eingelassenen Dübelkörper (27) und eine von einem Endabschnitt (28) des Dübelkörpers (27) umgrenzte Einführöffnung zum Einführen eines Befestigungselements (11,12) in den Dübelkörper (27) aufweist, wobei an den Endabschnitt (28) des Dübelkörpers (27) über einen Verbindungsabschnitt (30 - 33) ein Halteabschnitt (29) angebunden ist, der seitlich von dem Endabschnitt (28) absteht,

   - wobei an der Unterseite (20) des Plattenelements (3) eine Halterung (38,39) vorgesehen ist, in der die Durchgangsöffnung (21,22) des Plattenelements (3) mündet,

   - und wobei der Dübel (4,5) im Gebrauch mit seinem Halteabschnitt (29) in der Halterung (38,39) gehalten ist, die einen in Längsrichtung des Dübels (4,5) wirkenden Anschlag (48) für den Halteabschnitt (29) des Dübels (4,5) bildet,

   **dadurch gekennzeichnet,**

   - **dass** der Verbindungsabschnitt (30 - 33) eine Sollbruchstelle (35) aufweist, und
   - **dass** die Innenkontur der Durchgangsöffnung (21,22) des Plattenelements (3) so an die Außenkontur des Dübelkörpers (27) angepasst ist, dass der Dübelkörper (27) nach einem Bruch des Verbindungsabschnitts (30 - 33) des Dübels (4,5) durch die Durchgangsöffnung (21,22) des Plattenelements (3) bewegbar ist.

2. System nach Anspruch 1, **dadurch gekennzeichnet, dass** der kleinste Innendurchmesser Di_min der Durchgangsöffnung (21,22) des Plattenelements (3) größer ist als der größte Außendurchmesser DaK_max des Dübelkörpers (27), jedoch kleiner als der größte Außendurchmesser DaH_max des Dübels (4,5) in dem Bereich, in dem der Halteabschnitt (29) an den Dübelkörper (27) angebunden ist (DaK_max < Di_min < DaH_max).

3. System nach einem der voranstehenden Ansprüche, **dadurch gekennzeichnet, dass** zur Ausbildung seiner Sollbruchstelle (35) die Dicke oder Breite des Verbindungsabschnitts (30 - 33) lokal reduziert ist.

4. System nach Anspruch 3, **dadurch gekennzeichnet, dass** zur Ausbildung der Sollbruchstelle (35) eine Kerbe (34) oder Nut in den Verbindungsabschnitt (30 - 33) eingeformt ist.

5. System nach einem der voranstehenden Ansprüche, **dadurch gekennzeichnet, dass** der Verbindungsabschnitt (30 - 33) steg- oder stiftartig ausgebildet ist.

6. System nach einem der voranstehenden Ansprüche, **dadurch g**ekennzeichnet, dass** der Halteabschnitt (29) nach Art eines Ringsegments oder vollständigen Rings ausgebildet ist, das oder der um den Endabschnitt (28) des Dübelkörpers (27) umläuft, der die Einführöffnung des Dübelkörpers (27) umgrenzt.

7. System nach Anspruch 6, **dadurch gekennzeichnet, dass** der Halteabschnitt (29) an den Endabschnitt (28) des Dübelkörpers (27) durch mindestens zwei jeweils eine Sollbruchstelle (35) aufweisende Verbindungsabschnitte (30 - 33) angebunden ist, die beabstandet zueinander und um den Dübelkörper (27) verteilt zwischen dem Endabschnitt (28) und dem Halteabschnitt (29) angeordnet sind.

8. System nach einem der voranstehenden Ansprüche, **dadurch gekennzeichnet, dass** die an dem Plattenelement (3) ausgebildete Halterung (38,39) für den Dübel (4,5) eine Schiebeführung (40) umfasst, in die der Dübel (4,5) mit seinem Halteabschnitt (29) einschiebbar ist und die sich quer zur Längsachse der Durchgangsöffnung (21,22) des Plattenelements (3) an dessen Unterseite (20) erstreckt.

9. System nach Anspruch 8, **dadurch gekennzeichnet, dass** die Halterung (38,39) ein Anschlagelement (45) umfasst, das die in Bezug auf die Durchgangsöffnung (21,22) des Plattenelements (3) lagerichtige Schiebestellung des Dübels (4,5) festlegt.

10. System nach Anspruch 8 oder 9, **dadurch gekennzeichnet, dass** ein Riegelelement (46) vorgesehen ist, das den Dübel (4,5) in seiner in Bezug auf die Durchgangsöffnung (21,22) des Plattenelements (3) lagerichtigen Position fixiert.

11. System nach Anspruch 9, **dadurch gekennzeichnet, dass** das Riegelelement (46) durch eine an das Plattenelement (3) angeformte Raste oder einen an dem Plattenelement (3) befestigbaren Bolzen (51) gebildet ist.

12. System nach einem der voranstehenden Ansprüche, **dadurch gekennzeichnet, dass** der Dübel (4,5) in Bezug auf seine Längsachse (L) verdrehsicher in der Halterung (38,39) des Plattenelements (3) gehalten ist.

13. System nach einem der voranstehenden Ansprüche, **dadurch gekennzeichnet, dass** das Plattenelement (3) eine Unterlegplatte ist, auf deren Oberseite eine Aufstandfläche ausgebildet ist, auf der im Gebrauch die zu befestigende Schiene (S) abgestützt ist.

14. Anordnung zur Befestigung einer Schiene (S) auf einem Untergrund (2), wobei die Anordnung ein durch ein Plattenelement (3) und ein an dem Plattenelement gehaltenen Dübel (4,5) gebildetes System zur Schienenbefestigung umfasst, wobei der Dübel (4,5) mindestens mit einem Abschnitt in den Untergrund (2) eingegossen ist, **dadurch gekennzeichnet, dass** das System zur Schienenbefestigung gemäß einem der voranstehenden Ansprüche ausgebildet ist.

15. Verfahren zur Reparatur einer gemäß Anspruch 14 ausgebildeten Anordnung (1) umfassend folgende Arbeitsschritte:

- Entfernen eines durch die Durchgangsöffnung (21,22) des Plattenelements (3) geführten und in dem Dübel (4,5) sitzenden Befestigungselements;
- Einführen eines Werkzeugs durch die Durchgangsöffnung (21,22) des Plattenelements (3);
- Belasten des in dem den Untergrund (2) bildenden Bauteil sitzenden Dübelkörpers (27) mittels des Werkzeugs, wobei die auf den Dübelkörper (27) wirkende Belastung so lange gesteigert wird, bis der Verbindungsabschnitt (30 - 33) des Dübels (4,5) an seiner Sollbruchstelle bricht;
- Herausbewegen des Dübelkörpers (27) aus dem Bauteil und durch die Durchgangsöffnung (21,22) des Plattenelements (3), wobei der Dübelkörper (27) in dem Bauteil eine durch den Dübelkörper (27) in dem Bauteil abgeformte Dübelausnehmung hinterlässt;
- Einführen eines neuen Dübelkörpers (27) durch die Durchgangsöffnung (21,22) des Plattenelements (3) in die Dübelausnehmung des Bauteils.

## Claims

1. System for attaching a rail (S) for a rail vehicle onto a substrate (2), wherein the system

- has a plate element (3), which has an underside (20), with which the plate element (3) is supported on the substrate (2) during use, an upper side (14) facing away from the substrate (2) during use and a through-opening (21, 22) leading from the upper side (14) to the underside (20), and
- comprises an anchor fitting (4, 5), which has an anchor fitting body (27) recessed into the substrate (2) during use and an insertion opening surrounded by an end section (28) of the anchor fitting body (27) for inserting an attachment element (11, 12) into the anchor fitting body (27),

- wherein a holding section (29), which protrudes laterally from the end section (28), is connected to the end section (28) of the anchor fitting body (27) via a connecting section (30 - 33),

- wherein a holder (38, 39), into which opens the through-opening (21, 22) of the plate element (3), is provided on the underside (20) of the plate element (3),
- and wherein the anchor fitting (4, 5) is held during use with its holding section (29) in the holder (38, 39), which forms a stop (48), which acts in the longitudinal direction of the anchor fitting (4, 5), for the holding section (29) of the anchor fitting (4, 5),

**characterized in that**

- the connecting section (30 - 33) has a predetermined breaking point (35) and
- that the inner contour of the through-opening (21, 22) of the plate element (3) is adapted to the outer contour of the anchor fitting body (27) such that the anchor fitting body (27) can be moved through the through-opening (21, 22) of the plate element (3) after a break of the connecting section (30 - 33) of the anchor fitting (4, 5).

2. System according to claim 1, **characterised in that** the smallest inner diameter Di_min of the through-opening (21, 22) of the plate element (3) is larger than the largest outer diameter DaK_max of the anchor fitting body (27), but smaller than the largest outer diameter DaH_max of the anchor fitting (4, 5) in the region in which the holding section (29) is connected to the anchor fitting body (27) (DaK_max < Di_min < DaH_max).

3. System according to any one of the preceding claims, **characterised in that**, in order to form its predetermined breaking point (35), the thickness or width of the connecting section (30 - 33) is locally reduced.

4. System according to claim 3, **characterised in that**, in order to form the predetermined breaking point (35), a notch (34) or groove is moulded into the connecting section (30 - 33).

5. System according to any one of the preceding claims, **characterised in that** the connecting section (30 - 33) is designed to be web- or pin-like.

6. System according to any one of the preceding claims, **characterised in that** the holding section (29) is designed in the manner of a ring segment or complete ring which runs around the end section (28) of the anchor fitting body (27) which surrounds the insertion opening of the anchor fitting body (27).

7. System according to claim 6, **characterised in that** the holding section (29) is connected to the end section (28) of the anchor fitting body (27) by at least two connection sections (30 - 33), which each have a predetermined breaking point (35) and are arranged spaced apart from one another and distributed around the anchor fitting body (27) between the end section (28) and the holding section (29).

8. System according to any one of the preceding claims, **characterised in that** the holder (38, 39), which is formed on the plate element (3), for the anchor fitting (4, 5) comprises a sliding guide (40) into which the anchor fitting (4, 5) can be inserted with its holding section (29) and which extends transversely to the longitudinal axis of the through-opening (21, 22) of the plate element (3) on its underside (20).

9. System according to claim 8, **characterised in that** the holder (38, 39) comprises a stop element (45) which defines the correct sliding position of the anchor fitting (4, 5) in relation to the through-opening (21, 22) of the plate element (3).

10. System according to claim 8 or 9, **characterised in that** a locking element (46) is provided which fixes the anchor fitting (4, 5) in its correct position in relation to the through-opening (21, 22) of the plate element (3).

11. System according to claim 9, **characterised in that** the locking element (46) is formed by a catch which is moulded on the plate element (3) or a bolt (51) which can be attached to the plate element (3).

12. System according to any one of the preceding claims, **characterised in that** the anchor fitting (4, 5) is held in a torsion-proof manner in relation to its longitudinal axis (L) in the holder (38, 39) of the plate element (3).

13. System according to any one of the preceding claims, **characterised in that** the plate element (3) is a base plate on whose upper side a contact surface is formed on which the rail (S) to be attached is supported during use.

14. Arrangement for attaching a rail (S) onto a substrate (2), wherein the arrangement comprises a system for rail attachment formed by a plate element (3) and an anchor fitting (4, 5) held on the plate element, wherein the anchor fitting (4, 5) is cast into the substrate (2) with at least one section, **characterised in that** the system for rail attachment is designed according to any one of the preceding claims.

15. Method for repairing an arrangement (1) designed according to claim 14, comprising the following work steps:

- removing an attachment element guided through the through-opening (21, 22) of the plate element (3) and seated in the anchor fitting (4, 5);
- inserting a tool through the through-opening (21, 22) of the plate element (3);
- loading the anchor fitting body (27) seated in the component forming the substrate (2) by means of the tool, wherein the load acting on the anchor fitting body (27) is increased until the connecting section (30 - 33) of the anchor fitting (4, 5) breaks at its predetermined breaking point;
- moving the anchor fitting body (27) out of the component and through the through-opening (21, 22) of the plate element (3), wherein the anchor fitting body (27) leaves behind in the component an anchor fitting recess moulded by the anchor fitting body (27) in the component;
- inserting a new anchor fitting body (27) through the through-opening (21, 22) of the plate element (3) into the anchor fitting recess of the component.

## Revendications

1. Système de fixation d'un rail (S) pour un véhicule ferroviaire sur un substrat (2), le système comportant

   - un élément plan (3) présentant une face inférieure (20) avec laquelle l'élément plan (3) est en appui sur le substrat (2) pendant l'utilisation, une face supérieure (14) opposée au substrat (2) pendant l'utilisation ainsi qu'une ouverture traversante (21, 22) menant de la face supérieure (14) à la face inférieure (20), et
   - comprenant un ancrage (4, 5) présentant un corps d'ancrage (27) inséré dans le substrat (2) pendant l'utilisation et une ouverture d'introduction définie par une partie d'extrémité (28) du corps d'ancrage (27) pour insérer un élément de fixation (11, 12) dans le corps d'ancrage (27),
   - une partie de maintien (29) qui fait saillie latéralement de la partie d'extrémité (28) est connectée à la partie d'extrémité (28) du corps d'ancrage (27) via une partie de connexion (30 - 33),
   - un support (38, 39) étant prévu sur la face inférieure (20) de l'élément plan (3) dans lequel débouche l'ouverture traversante (21, 22) de l'élément plan (3),
   - et l'ancrage (4, 5) étant maintenu avec sa partie de maintien (29) dans le support (38, 39) qui forme une butée (48) pour la partie de maintien (29) de l'ancrage (4, 5) agissant dans la direction longitudinale de l'ancrage (4, 5), **caractérisée en ce**
   - **que** la partie de connexion (30 - 33) présente un point de rupture prédéterminé (35),

et
   - **que** le contour intérieur de l'ouverture de traversante (21, 22) de l'élément plan (3) est adapté au contour extérieur du corps d'ancrage (27) de sorte que le corps d'ancrage (27) peut être déplacé à travers l'ouverture de traversante (21, 22) de l'élément plan (3) après une rupture de la partie de connexion (30 - 33) de l'ancrage (4, 5).

2. Système selon la revendication 1, **caractérisé en ce que** le plus petit diamètre intérieur Di_min de l'ouverture traversante (21, 22) de l'élément plan (3) est supérieur au plus grand diamètre extérieur DaK_max du corps d'ancrage (27), mais inférieur au plus grand diamètre extérieur DaH_max de l'ancrage (4, 5) dans la zone dans laquelle la partie de maintien (29) est connectée au corps d'ancrage (27) (DaK_max < Di_min < DaH_max).

3. Système selon l'une des revendications précédentes, **caractérisé en ce que** l'épaisseur ou la largeur de la partie de connexion (30 - 33) est réduite localement pour former son point de rupture prédéterminé (35).

4. Système selon la revendication 3, **caractérisé en ce qu'**une encoche (34) ou une rainure est formée dans la partie de connexion (30 - 33) pour former le point de rupture prédéterminé (35).

5. Système selon l'une quelconque des revendications précédentes, **caractérisé en ce que** la partie de connexion (30 - 33) est en forme de nervure ou de tenon.

6. Système selon l'une quelconque des revendications précédentes, **caractérisé en ce que** la partie de maintien (29) est en forme d'un segment annulaire ou d'un anneau complet qui tourne autour de la partie d'extrémité (28) du corps d'ancrage (27) qui délimite l'ouverture d'insertion du corps d'ancrage (27).

7. Système selon la revendication 6, **caractérisé en ce que** la partie de maintien (29) est connectée à la partie d'extrémité (28) du corps d'ancrage (27) par au moins deux parties de connexion (30 - 33), présentant respectivement un point de rupture prédéterminé (35), qui sont agencées espacées l'une de l'autre et réparties autour du corps d'ancrage (27) entre la partie d'extrémité (28) et la partie de maintien (29).

8. Système selon l'une quelconque des revendications précédentes, **caractérisé en ce que** le support (38, 39) formé sur l'élément plan (3) pour l'ancrage (4, 5) comprend un guidage coulissant (40) dans lequel l'ancrage (4, 5) peut être inséré avec sa partie de maintien (29) et qui s'étend transversalement par rapport à l'axe longitudinal de l'ouverture traversante (21, 22) de l'élément plan (3) sur sa face inférieure (20).

9. Système selon la revendication 8, **caractérisé en ce que** le support (38, 39) comprend un élément de butée (45) qui détermine la position de coulissement correcte de l'ancrage (4, 5) par rapport à l'ouverture traversante (21, 22) de l'élément plan (3).

10. Système selon la revendication 8 ou 9, **caractérisé en ce qu'**un élément de verrouillage (46) est prévu pour fixer l'ancrage (4, 5) dans sa position correcte par rapport à l'ouverture traversante (21, 22) de l'élément plan (3).

11. Système selon la revendication 9, **caractérisé en ce que** l'élément de verrouillage (46) est formé par un verrou moulé sur l'élément plan (3) ou un boulon (51) susceptible d'être fixé sur l'élément plan (3).

12. Système selon l'une quelconque des revendications précédentes, **caractérisé en ce que** l'ancrage (4, 5) est maintenu sans possibilité de rotation par rapport à son axe longitudinal (L) dans le support (38, 39) de l'élément plan (3).

13. Système selon l'une quelconque des revendications précédentes, **caractérisé en ce que** l'élément plan (3) est une plaque de calage sur la face supérieure de laquelle est formée une surface d'appui sur laquelle repose, pendant l'utilisation, le rail (S) à fixer.

14. Agencement pour la fixation d'un rail (S) sur un substrat (2), l'agencement comprenant un système de fixation de rail formé par un élément plan (3) et un ancrage (4, 5) maintenu sur l'élément plan, l'ancrage (4, 5) étant moulé au moins avec une partie dans le substrat (2), **caractérisé en ce que** le système de fixation de rail est formé selon l'une des revendications précédentes.

15. Procédé de réparation d'un agencement (1) conçu selon la revendication 14, comprenant les étapes de travail suivantes :

    - retrait d'un élément de fixation guidé à travers l'ouverture traversante (21, 22) de l'élément plan (3) et logé dans l'ancrage (4, 5) ;
    - introduction d'un outil à travers l'ouverture de traversante (21, 22) de l'élément plan (3) ;
    - sollicitation du corps d'ancrage (27) logé dans le composant formant le substrat (2) au moyen de l'outil, la charge agissant sur le corps d'ancrage (27) étant augmentée jusqu'à ce que la section de connexion (30 - 33) de l'ancrage (4, 5) se brise à son point de rupture prédéterminé ;

    - le déplacement du corps d'ancrage (27) hors du composant et à travers l'ouverture traversante (21, 22) de l'élément plan (3), le corps d'ancrage (27) laissant dans le composant un évidement d'ancrage formé par le corps d'ancrage (27) dans le composant;
    - introduction d'un nouveau corps d'ancrage (27) par l'ouverture traversante (21, 22) de l'élément plan (3) dans l'évidement d'ancrage du composant.

Fig.1

EP 4 256 209 B1

L

29

28

4,5

27

L

Fig.2

Fig.3

Fig.4

Fig.5

Fig.6

Di_min

21

40

DaH_max

29

4

27

DaK_max

Fig.7a

Fig.7b

Fig.7c

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202015103972 U1
- WO 2019137905 A1
- DE 102005003799 A1

**In der Beschreibung aufgeführte Nicht-Patentliteratur**

- Oberbauhandbuch. August 2010